# EUROPEAN PATENT APPLICATION

(11) **EP 2 769 840 A1**
(43) Date of publication of application: **27.08.2014**
(21) Application number: 12841132.9
(22) Date of filing: 18.10.2012
(51) Int. Cl.: B32B 27/36, C08J 7/04

(54) **COATING FILM**

(30) Priority: 22.10.2011 JP 2011232315
(71) Applicant: Mitsubishi Plastics, Inc., Tokyo 100-8252 (JP)
(72) Inventor: FUNATSU, Ryosuke, Maibara-shi Shiga 521-0234 (JP); KAWASAKI, Taishi, Maibara-shi Shiga 521-0234 (JP); AMAKO, Katsuya, Maibara-shi Shiga 521-0234 (JP); KATO, Yuka, Maibara-shi Shiga 521-0234 (JP); FUJITA, Masato, Maibara-shi Shiga 521-0234 (JP)
(74) Representative: Merkle, Gebhard
(86) International application number: PCT/JP2012/076946
(87) International publication number: WO 2013/058315

(57) **Abstract**

According to the present invention, there is provide a coated film that is highly excellent in transparency and slipping property, and can be suitably used in the applications in which good transparency and slipping property are needed, for example, such as film members for transparent electrodes for touch panels, etc. The present invention relates to a coated film comprising a multilayer polyester film comprising both outermost layers in which particles having an average particle diameter of not more than 3.0 *µ*m are incorporated, and a coating layer formed on at least one surface of the multilayer polyester film, the coating layer comprising particles having an average particle diameter larger than a thickness of the coating layer.

## Description

### TECHNICAL FIELD

The present invention relates to a coated film, and more particularly, to a coated film that can be suitably used in the applications in which a good slipping property and a good transparency are required, for example, such as film members for transparent electrodes for touch panels, etc.

### BACKGROUND ART

In recent years, polyester films have been used in various members for displays, and also used as a base material of films for transparent electrodes for touch panels or the like. In these applications, since an appearance of the product is important, it has been required that a base material film used therein is excellent in transparency. In addition, it has been required that the base material film has a good handling property and a good mar resistance in view of after-processing thereof.

In order to attain a good handling property of the film such as an easy-slipping property, a take-up property and an anti-blocking property thereof, it has been generally used the method of incorporating particles into the base material film to form irregularities on the surface of the film. However, when incorporating the particles into the base material film, in general, there occurs such a tendency that the resulting film is deteriorated in transparency owing to a large difference in refractive index between the particles and the polyester film or voids formed around the particles upon drawing the film.

In order to enhance a transparency of the film, there may be used the method of reducing an amount of the particles in the base material film or adding no particles thereto. However, in such a method, there tends to arise such a problem that the film is injured owing to its poor slipping property during the step of producing the polyester film itself or during the step of processing the polyester film as a base material.

As the method of suppressing deterioration in transparency of the film and imparting a slipping property to the film, there is known the method of incorporating porous spherical silica into the film (Patent Document 1). In the case where the porous spherical silica is used as the particles in the film, the affinity between the particles and the polyester can be enhanced to thereby suppress formation of voids in the film, so that the resulting film can maintain a good transparency. However, if the particles added have such a particle diameter or used in such an amount as being capable of imparting a sufficient slipping property to the film, the resulting film tends be insufficient in transparency when used as members for displays.

### CITATION LIST

### PATENT LITERATURE

Patent Document 1: Japanese Patent Application Laid-Open (KOKAI) No. 11-343352

### SUMMARY OF THE INVENTION

### Problems to be Solved by the Invention

The present invention has been accomplished in view of the above conventional problems. An object of the present invention is to provide a coated film having a good transparency and a good slipping property.

### Means for Solving Problems

As a result of the present inventors' earnest study in view of the above problems, it has been found that these problems can be readily solved by using a coated film having a specific structure. The present invention has been attained on the basis of this finding.

That is, in an aspect of the present invention, there is provided a coated film comprising a multilayer polyester film comprising both outermost layers in which particles having an average particle diameter of not more than 3.0 *µ*m are incorporated, and a coating layer formed on at least one surface of the multilayer polyester film, the coating layer comprising particles having an average particle diameter larger than a thickness of the coating layer.

### Effect of the Invention

In accordance with the present invention, there can be provided a base material film that is excellent in transparency and slipping property, and hardly suffers from damage upon handling in after-processing thereof owing to a good slipping property thereof. Therefore, the present invention has a high industrial value.

### PREFERRED EMBODIMENTS FOR CARRYING OUT THE INVENTION

The polyester film may have not only a three layer structure but also a four or more multilayer structure, and the layer structure of the polyester film is not particularly limited. In view of facilitated production, the polyester film more preferably has a three-layer structure.

The polyester for the polyester film may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any suitable compounds conventionally known as the polymerization catalyst may be used therefor. Examples of the polymerization catalyst include an antimony compound, a titanium compound, a germanium compound, a manganese compound, an aluminum compound, a magnesium compound and a calcium compound. Among these compounds, in particular, from the standpoint of a high brightness of the resulting film, preferred is the titanium compound.

In the present invention, it is essentially required that both outermost layers of the multilayer polyester film each comprise the particles having an average particle diameter of not more than 3.0 *µ*m.

The above particles are used for the purpose of enhancing a slipping property of the film, attaining a good handling property of the film, and imparting a good mar resistance to the film.

The average particle diameter of the particles is not more than 3.0 *µ*m, preferably 0.03 to 2.5 *µ*m, and more preferably 0.5 to 2.0 *µ*m. When the average particle diameter of the particles becomes excessively large, although it is effective to impart a good slipping property to the film, the resulting film tends to be deteriorated in transparency. For this reason, when the average particle diameter of the particles is out of the above-specified range, the resulting film tends to be unusable in the applications requiring a good transparency as an important factor.

The content of the particles in the polyester film may vary depending upon the average particle diameter of the particles, and the content of the particles in the respective polyester film layers (surface layers) comprising the particles is in the range of usually 1 to 5000 ppm, preferably 50 to 1000 ppm and more preferably 100 to 700 ppm. When the content of the particles is less than 1 ppm, it may be impossible to impart a sufficient slipping property to the film. When the content of the particles is more than 5000 ppm, the resulting film tends to be deteriorated in transparency.

The thickness of the respective polyester film layers (surface layers) comprising the particles may vary depending upon the average particle diameter and content of the particles, and is usually in the range of 0.5 to 125 *µ*m, preferably 1 to 10 *µ*m and more preferably 1 to 5 *µ*m. When the thickness of the polyester film layer comprising the particles is less than 0.5 *µ*m, there tends to occur such a fear that the particles fall off from the film. When the thickness of the polyester film layer comprising the particles is more than 125 *µ*m, the resulting film tends to be insufficient in transparency.

The kinds of the particles are not particularly limited as long as they are capable of imparting a good slipping property to the film. Specific examples of the particles include organic particles such as particles of styrene-based resins, acrylic resins, urea resins, phenol resins, epoxy resins and benzoguanamine resins; and inorganic particles such as particles of silica, calcium carbonate, magnesium carbonate, barium carbonate, calcium sulfate, calcium phosphate, magnesium phosphate, kaolin, aluminum oxide and titanium oxide. From the standpoint of a good transparency, among these particles, preferred are the organic particles, and more preferred are particles of styrene-based resins and acrylic resins.

In order to enhance a dispersibility of the particles or an affinity of the particles to the polyester, etc., the above organic particles may comprise a metal compound or a silicon compound. Examples of the metal compound include an aluminum compound, a titanium compound, a zirconium compound and a yttrium compound. In particular, the metal compound is preferably in the form of an oxide of these metal compounds, and more preferably is aluminum oxide or zirconium oxide. Also, the silicon compound is preferably in the form of a silicon oxide compound.

The organic particles are preferably of a crosslinking type from the standpoint of a good heat resistance. Examples of the crosslinking compound include divinyl benzene, ethylene glycol di(meth)acrylate and trimethylol propane tri(meth)acrylate. Among these crosslinking compounds, divinyl benzene is especially preferred from the standpoint of an excellent strength thereof.

The most preferred configuration of the particles includes crosslinking organic particles, for example, particles of a copolymer of styrene or a (meth)acrylate with divinyl benzene such as a styrene-divinyl benzene copolymer in which aluminum oxide or zirconium oxide is included as a dispersant. Thus, the aluminum oxide or zirconium oxide mixed in the crosslinking organic particles is bonded onto a surface of the respective crosslinking organic particles and acts as a dispersant.

The shape of the particles is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The method of adding the particles to the polyester is not particularly limited, and any conventionally known methods can be suitably used therefor. For example, the particles may be added at any optional stages in the process for producing the polyester forming the respective layers. The particles are preferably added to the polyester after completion of the esterification reaction or transesterification reaction.

The polyester film may also comprise an ultraviolet absorber in order to improve a weathering resistance of the film and prevent deterioration in liquid crystals of liquid crystal displays used in touch panels and the like. The ultraviolet absorber is not particularly limited as long as it is a compound that is capable of absorbing an ultraviolet ray and can withstand heat applied during the process for producing the polyester film.

As the ultraviolet absorber, there are generally known an organic ultraviolet absorber and an inorganic ultraviolet absorber. In view of a good transparency of the resulting film, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

Meanwhile, the above polyester film may also comprise, in addition to the above particles and ultraviolet absorbers, known additives such as an antioxidant, an antistatic agent, a thermal stabilizer, a lubricant, a dye, a pigment, etc., if required.

The thickness of the multilayer polyester film is not particularly limited, and the multilayer polyester film may have any thickness as long as it can be produced while maintaining a suitable film shape. The thickness of the multilayer polyester film is usually in the range of 10 to 300 *µ*m and preferably 25 to 250 *µ*m.

Next, an example of the process of producing the polyester film used in the present invention is more specifically explained, although the present invention is not particularly limited thereto. That is, in the production process, there is preferably used such a method in which pellets prepared by drying the above-mentioned polyester raw material are extruded using a single-screw extruder from a die in the form of a molten sheet, and the molten sheet is cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn film is further drawn in the direction perpendicular to the drawing direction of the first stage. In this case, the drawing temperature is usually 70 to 170°C, and the draw ratio is usually 3.0 to 7 times and preferably 3.5 to 6 times. Successively, the resulting biaxially drawn sheet is heat-set at a temperature of 180 to 270°C under a tension or under relaxation within 30% to obtain a biaxially oriented film. Upon the above drawing steps, there may also be used the method in which the drawing in each direction is carried out in two or more stages. In such a case, the multi-stage drawing is preferably performed such that the total draw ratio in each of the two directions finally falls within the above-specified range.

Also, upon producing the polyester film, there may also be used a simultaneous biaxial drawing method. The simultaneous biaxial drawing method is such a method in which the above undrawn sheet is drawn and oriented in both of the machine and width directions at the same time while maintaining the sheet in a suitably temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 250°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the coated film according to the present invention is explained. The coating layer may be formed either by an in-line coating method in which the surface of the polyester film is subjected to coating treatment during the film-forming step of the polyester film, or by an off-line coating method in which the polyester film produced is once transferred to an outside of the film production system and subjected to coating treatment. Among these methods, the in-line coating method is preferably used because the coating layer can be produced simultaneously with formation of the polyester film and therefore at low costs.

For example, in the case of a sequential biaxial drawing process, the in-line coating treatment may be carried out, in particular, after completion of the longitudinal drawing but before initiation of the lateral drawing, although the present invention is not particularly limited thereto. When the coating layer is formed on the polyester film by the in-line coating method, the coating can be carried out simultaneously with formation of the polyester film, and the coating layer can be treated at a high temperature when subsequently subjecting the drawn polyester film to the heat-setting step, so that the resulting coated film can be enhanced in performance such as an adhesion property to various surface functional layers to be formed on the coating layer as well as a wet heat resistance of the resulting film, etc. Also, when the coating step is conducted before drawing the polyester film, the thickness of the coating layer may be changed by adjusting a draw ratio of the film, so that the thin-film coating step can be more easily conducted as compared to the off-line coating method. Thus, by using the in-line coating method, in particular, by conducting the in-line coating method before the drawing, it is possible to produce a film suitable as the polyester film used in the present invention.

In the present invention, it is essentially required that the above multilayer polyester film is provided on at least one surface thereof with a coating layer comprising particles, and the particles contained in the coating layer have an average particle diameter larger than a thickness of the coating layer.

The above coating layer is provided for enhancing a slipping property of the surface of the resulting film and improving a handling property of the film, and is preferably designed so as to enhance adhesion of the coating layer to a surface functional layer such as a hard coat layer.

The particles incorporated into the coating layer are used for improving a slipping property of the surface of the film. Specific examples of the particles include inorganic particles such as silica, kaolinite, talc, soft calcium carbonate, heavy calcium carbonate, zeolite, alumina, barium sulfate, carbon black, zinc oxide, zinc sulfate, zinc carbonate, titanium dioxide, satin white, aluminum silicate, diatomaceous earth, calcium silicate, aluminum hydroxide, hydrated halloysite, magnesium carbonate and magnesium hydroxide; and organic particles such as acrylic or methacrylic resins, vinyl chloride-based resins, vinyl acetate-based resins, nylons, styrene/acrylic resins, styrene/butadiene-based resins, polystyrene/acrylic resins, polystyrene/isoprene-based resins, methyl methacrylate/butyl methacrylate-based resins, melamine-based resins, polycarbonate-based resins, urea-based resins, epoxy-based resins, urethane-based resins, phenol-based resins, diallyl phthalate-based resins and polyester-based resins. These particles may be used alone or in the form of a mixture of any two or more thereof. Of these particles, silica is preferred from the viewpoints of a good transparency and a good mar resistance.

The particle diameter of the above particles may vary depending upon the thickness of the coating layer, and is larger than the thickness of the coating layer comprising the particles. The particles usually have a particle diameter of 0.03 to 1.0 *µ*m, preferably 0.03 to 0.5 *µ*m, and more preferably 0.06 to 0.2 *µ*m. When the particle diameter of the particles is more than 1.0 *µ*m, the resulting film tends to be considerably deteriorated in transparency.

Upon forming the coating layer, various conventionally known compounds may be used in combination with the above particles, etc., in the coating layer unless the effects of the present invention are adversely affected by addition thereof. Of these compounds, various polymers are preferably used in order to prevent falling-off of the particles from the coating layer and enhance adhesion of the coating layer to a surface functional layer such as a hard coat layer.

Specific examples of the various polymers include polyester resins, acrylic resins, urethane resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc. Among these polymers, in view of improving an adhesion property of the coating layer to the surface functional layers such as a hard coat layer and enhancing an appearance of the coating layer, preferred are polyester resins, acrylic resins and urethane resins.

The polyester resins may be those polyester resins produced, for example, from the following polycarboxylic acids and polyhydroxy compounds as main constituents. More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt and ester-forming derivatives thereof. Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethylene oxide glycol, dimethylol propionic acid, glycerin, trimethylol propane, sodium dimethylol ethyl sulfonate and potassium dimethylol propionate. The polyester resins may be synthesized by subjecting one or more compounds appropriately selected from the aforementioned polycarboxylic acids and one or more compounds appropriately selected from the aforementioned polyhydroxy compounds to polycondensation reaction by an ordinary method.

The acrylic resin used in the present invention may be in the form of a polymer obtained from a polymerizable monomer having a carbon-carbon double bond such as, typically, an acrylic monomer and a methacrylic monomer. The polymer may be either a homopolymer or a copolymer. The polymer may also include a copolymer of the polymer with the other polymer (such as, for example, a polyester and a polyurethane). Examples of the copolymer include a block copolymer and a graft copolymer. In addition, the polymer may also include a polymer obtained by polymerizing the polymerizable monomer having a carbon-carbon double bond in a polyester solution or a polyester dispersion (which may also be in the form of a mixture of the polymers). Further, the polymer may also include a polymer obtained by polymerizing the polymerizable monomer having a carbon-carbon double bond in a polyurethane solution or a polyurethane dispersion (which may also be in the form of a mixture of the polymers). Similarly, the polymer may also include a polymer obtained by polymerizing the polymerizable monomer having a carbon-carbon double bond in the other polymer solution or the other polymer dispersion (which may also be in the form of a mixture of the polymers). In addition, in the case where it is required to further enhance an adhesion property of the coating layer, a hydroxyl group may be incorporated thereinto.

The above polymerizable monomer having a carbon-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl propionate; various silicon-containing polymerizable monomers such as γ-methacryloxypropyl trimethoxysilane and vinyl trimethoxysilane; various phosphorus-containing vinyl-based monomers; various halogenated vinyl-based monomers such as vinyl chloride and vinylidene chloride; and various conjugated dienes such as butadiene.

The urethane resin is produced by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

For the purpose of enhancing an adhesion property of the coating layer to a surface functional layer such as a hard coat layer to be formed on the coating layer, one kind of crosslinking agent is preferably used, and two or more kinds of crosslinking agents are more preferably used to form the coating layer. Even when incorporating only one kind of crosslinking agent in the coating layer, it is possible to enhance an adhesion property of the coating layer. However, in the case where two or more kinds of crosslinking agents are used in combination with each other, the resulting coating layer is further improved in adhesion property, in particular, improved in adhesion property after subjected to a wet heat treatment.

Examples of the crosslinking agent used for forming the coating layer include an oxazoline compound, an epoxy compound, a melamine compound, an isocyanate-based compound, a carbodiimide-based compound and a silane coupling compound. Among these compounds, in view of a good adhesion property of the coating layer, especially preferred are an oxazoline compound and an epoxy compound, and more preferred is a combined use of an oxazoline compound and an epoxy compound.

As the oxazoline compound, there are preferably used, in particular, polymers having an oxazoline group which may be produced in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of good industrial availability thereof. The other monomers used in the copolymer are not particularly limited as long as they are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride and vinylidene chloride; and α,β-unsaturated aromatic monomers such as styrene and α-methyl styrene. These other monomers may be used alone or in combination of any two or more thereof.

Examples of the epoxy compound include condensates of epichlorohydrin with a hydroxyl group of ethylene glycol, polyethylene glycol, glycerol, polyglycerol, bisphenol A, etc., or an amino group. Examples of the epoxy compound include polyepoxy compounds, diepoxy compounds, monoepoxy compounds and glycidyl amine compounds. Specific examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Specific examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Specific examples of the monoepoxy compounds include allyl glycidyl ether, 2-ethylhexyl glycidyl ether and phenyl glycidyl ether. Specific examples of the glycidyl amine compounds include N,N,N',N'-tetraglycidyl-m-xylylenediamine and 1,3-bis(N,N-diglycidylamino)cyclohexane.

Examples of the melamine compounds include alkylolated melamine derivatives, partially or completely etherified compounds obtained by reacting the alkylolated melamine derivative with an alcohol, and mixtures of these compounds. Examples of the alcohol suitably used for the above etherification include methyl alcohol, ethyl alcohol, isopropyl alcohol, n-butanol and isobutanol. The melamine compound may be in the form of either a monomer or a dimer or higher polymer, or may be in the form of a mixture thereof. In addition, there may also be used those compounds obtained by co-condensing a urea or the like to a part of melamine. Further, a catalyst may also be used to enhance a reactivity of the melamine compound.

The isocyanate-based compound means an isocyanate or a compound having an isocyanate derivative structure such as typically a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate include polymers and derivatives of these isocyanates such as biuret compounds, isocyanurate compounds, uretdione compounds and carbodiimide-modified compounds of these isocyanates. These isocyanates may be used alone or in combination of any two or more thereof. Among these isocyanates, from the viewpoint of preventing occurrence of yellowing owing to ultraviolet radiation, aliphatic isocyanates and alicyclic isocyanates are more suitably used as compared to aromatic isocyanates.

When the isocyanate-based compound is used in the form of a blocked isocyanate, examples of blocking agents used for production thereof include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, the above isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving a dispersibility or a crosslinking reactivity of the isocyanate-based compounds.

The carbodiimide-based compound is used, in particular, for enhancing an adhesion property of the coating layer to a surface functional layer such as a hard coat layer which may be formed on the coating layer, etc., as well as improving a wet heat resistance of the coating layer. The preferred carbodiimide-based compound includes a polycarbodiimide compound comprising two or more carbodiimide structures or carbodiimide derivative structures in a molecule thereof in view of a good adhesion property or the like of the coating layer.

The carbodiimide-based compound may be synthesized by conventionally known techniques. In general, the carbodiimide-based compound may be obtained by a condensation reaction of a diisocyanate compound. The diisocyanate compound is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve a water solubility or a water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

Meanwhile, these crosslinking agents are used for improving a performance of the coating layer by allowing the crosslinking agents to react with the compounds contained therein during a drying step or a film-forming step thereof. Therefore, it is estimated that the resulting coating layer comprises the unreacted crosslinking agent, compounds obtained after the reaction, or a mixture thereof.

Upon forming the coating layer, in order to prevent occurrence of interference fringes when laminating various surface functional layers such as a hard coat layer on the coating layer, a high-refractive index material is preferably used in combination with the above components.

In general, it is considered that in order to suppress occurrence of interference fringes, the refractive index of the coating layer is controlled near to a geometrical mean value of a refractive index of the polyester film as the base material and a refractive index of the hard coat layer. Therefore, it is ideally required to adjust the refractive index of the coating layer near to the geometrical mean value. In this case, since the polyester film has a high refractive index, it is generally preferred that the coating layer is designed to have a high refractive index.

Examples of the high-refractive index material include compounds having an aromatic structure, metal oxides and metal chelate compounds, sulfur element-containing compounds, and halogen element-containing compounds. Of these high-refractive index materials, from the viewpoints of easiness of formation of the coating layer and various performances thereof, preferred are compounds having an aromatic structure and metal oxides.

In view of a good coatability on the polyester film, the compound having an aromatic structure is preferably in the form of a polymer, for example, such as a polyester resin, an acrylic resin or a urethane resin. Of these polymers, in particular, the polyester resin is preferred from such a viewpoint that a larger number of the aromatic structures such as a benzene ring can be introduced into a molecule of the polyester resin to thereby enhance a refractive index of the coating layer.

As the method of incorporating the aromatic structure into the polyester resin, there may be used, for example, the method of introducing two or more hydroxyl groups as substituent groups into the aromatic structure to provide a diol component or a polyhydroxyl group component, or the method of introducing two or more carboxyl groups as substituent groups into the aromatic structure to provide a dicarboxylic acid component or a polycarboxylic acid component.

As the compounds having an aromatic structure, there are preferably used compounds having such a condensed polycyclic aromatic structure as represented by the following formula 1 in a molecule thereof because the condensed polycyclic aromatic structure can provide compounds having a high refractive index more effectively than a benzene ring. Examples of the condensed polycyclic aromatic structure include naphthalene, anthracene, phenanthrene, naphthacene, benzo[a]anthracene, benzo[a]phenanthrene, pyrene, benzo[c]phenanthrene and perylene.

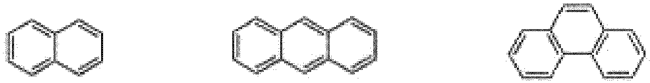

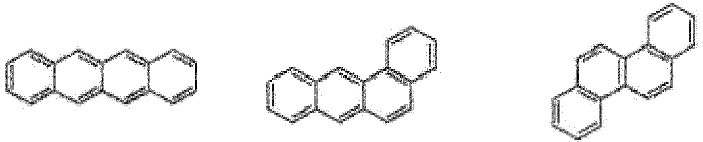

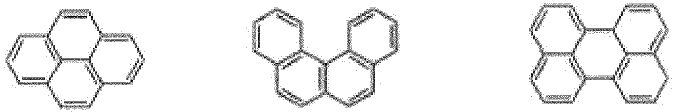

From the standpoint of hardly suffering from undesirable coloration during the process for producing the coated film, among the aforementioned condensed polycyclic aromatic compounds, compounds having a naphthalene structure are preferably used as the compound having an aromatic structure to be incorporated in the coating layer. Also, in view of a good adhesion property of the coating layer to various surface functional layers formed on the coating layer and a good transparency of the resulting film, those resins into which the naphthalene structure is incorporated as a constituent of the polyester can be suitably used. Typical examples of the naphthalene structure include 1,5-naphthalenedicarboxylic acid, 2,6-naphthalenedicarboxylic acid and 2,7-naphthalenedicarboxylic acid.

Meanwhile, by introducing not only a hydroxyl group or a carboxyl group but also a substituent group comprising a sulfur element, an aromatic substituent group such as a phenyl group, a halogen element group or the like into the compound having an aromatic structure, it is expected to enhance a refractive index of the resulting coating layer. From the viewpoint of a good coatability and a good adhesion property, the substituent group such as an alkyl group, an ester group, an amide group, a sulfonic group, a carboxyl group and a hydroxyl group may be introduced into the compound having an aromatic structure.

The metal oxide is used mainly for the purpose of controlling a refractive index of the coating layer. In particular, since the resin used in the coating layer has a low refractive index, the use of the metal oxide having a high refractive index is preferred, and the use of the metal oxide having a refractive index of not less than 1.7 is more preferred. Specific examples of the metal oxide include zirconium oxide, titanium oxide, tin oxide, yttrium oxide, antimony oxide, indium oxide, zinc oxide, antimony tin oxide and indium tin oxide. These metal oxides may be used alone or in combination of any two or more thereof. Among these metal oxides, preferred are zirconium oxide and titanium oxide. In particular, zirconium oxide is more preferred from the standpoint of imparting a good weather resistance to the coating layer.

The metal oxide tends to have a fear of causing deterioration in adhesion property of the coating layer depending upon its configuration upon use. Therefore, the metal oxide is preferably used in the form of particles. In addition, from the standpoint of a good transparency of the coating layer, the average particle diameter of the metal oxide is preferably not more than 100 nm, more preferably not more than 50 nm, and still more preferably not more than 25 nm.

Further, the coating layer may also comprise various additives such as a defoaming agent, a coatability improver, a thickening agent, an organic lubricant, an antistatic agent, an ultraviolet absorber, an antioxidant, a foaming agent, a dye and a pigment, if required, unless the subject matter of the present invention is adversely affected by the addition thereof.

The content of the particles having a larger particle diameter than the thickness of the coating layer in the coating solution forming the coating layer may vary depending upon the particle diameter thereof, and is usually 0.05 to 10% by weight, preferably 0.1 to 7% by weight and more preferably 0.1 to 1.5% by weight based on a total amount of whole non-volatile components in the coating solution. When the content of the particles having a larger particle diameter than the thickness of the coating layer in the coating solution is less than 0.05% by weight, the resulting film may fail to exhibit a sufficiently improved slipping property. When the content of the particles having a larger particle diameter than the thickness of the coating layer in the coating solution is more than 10% by weight, the resulting film tends to be deteriorated in transparency.

In the case where a polyester resin, an acrylic resin or a urethane resin is used as the polymer used for forming the coating layer, the content of the polymer in the coating solution forming the coating layer is usually not more than 80% by weight, preferably 3 to 70% by weight and more preferably 5 to 60% by weight based on a total amount of whole non-volatile components in the coating solution. When the content of the polymer in the coating solution is out of the above-specified range, there tends to occur such a fear that the resulting coating layer is deteriorated in adhesion property to a surface functional layer such as a hard coat layer.

In the case where an oxazoline compound is used as the crosslinking agent used in the coating layer, the content of the oxazoline compound in the coating solution forming the coating layer is usually not more than 50% by weight, preferably 1 to 40% by weight and more preferably 3 to 30% by weight based on a total amount of whole non-volatile components in the coating solution. When the content of the oxazoline compound in the coating solution is out of the above-specified range, there tends to occur such a fear that the obtained coating layer is deteriorated in adhesion property to a surface functional layer such as a hard coat layer, or the resulting coating layer tends to be deteriorated in coating appearance.

In the case where an epoxy compound is used as the crosslinking agent for forming the coating layer, the content of the epoxy compound in the coating solution forming the coating layer is usually not more than 50% by weight, preferably 3 to 40% by weight and more preferably 5 to 30% by weight based on a total amount of whole non-volatile components in the coating solution. When the content of the epoxy compound in the coating solution is out of the above-specified range, there tends to occur such a fear that the obtained coating layer is deteriorated in adhesion property to a surface functional layer such as a hard coat layer, or the coating layer tens to be deteriorated in coating appearance.

In the case where the condensed polycyclic aromatic compound is used as a component for forming the coating layer, the content of the condensed polycyclic aromatic structure in the condensed polycyclic aromatic compound is usually 5 to 80% by weight and preferably 10 to 60% by weight. The content of the condensed polycyclic aromatic compound in the coating solution for forming the coating layer is usually not more than 80% by weight, preferably 5 to 70% by weight and more preferably 10 to 60% by weight based on a total amount of whole non-volatile components in the coating solution. When the condensed polycyclic aromatic compound is used within such a specific range, the refractive index of the coating layer can be easily controlled, and the resulting film can be readily prevented from suffering from occurrence of interference fringes after forming a surface functional layer such as a hard coat layer on the coating layer. Meanwhile, the content of the condensed polycyclic aromatic structure in the condensed polycyclic aromatic compound may be determined as follows. That is, the coating layer is dissolved and extracted, for example, in a suitable solvent or warm water, and the obtained extract is fractionated by chromatography and subjected to structural analysis by NMR or IR, and further subjected to pyrolysis GC-MS (gas chromatography-mass spectrometry), an optical analysis or the like to thereby determine the content of the condensed polycyclic aromatic structure in the condensed polycyclic aromatic compound.

In the case where the metal oxide is used as a component for forming the coating layer, the content of the metal oxide in the coating solution forming the coating layer is usually not more than 70% by weight, preferably 5 to 50% by weight, more preferably 5 to 40% by weight and still more preferably 8 to 30% by weight based on a total amount of whole non-volatile components in the coating solution. When the content of the metal oxide in the coating solution is out of the above-specified range, occurrence of interference fringes on the resulting film tends to be hardly suppressed, or the obtained coating layer tends to be deteriorated in transparency.

The analysis of the components contained in the coating layer may be conducted, for example, by analysis methods such as TOF-SIMS, ESCA and fluorescent X-ray analysis.

When forming the coating layer by the in-line coating method, the coated film is preferably produced by the method in which an aqueous solution or a water dispersion comprising a series of the aforementioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvents may be used alone, or may be appropriately used in the form of a mixture of any two or more thereof.

The film thickness of the coating layer is usually in the range of 0.01 to 1.0 *µ*m and preferably 0.02 to 0.5 *µ*m. When the film thickness of the coating layer is out of the above-specified range, the resulting coating layer tends to fail to have a sufficient adhesion property to a surface functional layer, or falling-off of the particles from the coating layer tends to be caused, so that the resulting film tends to fail to exhibit a sufficiently improved slipping property.

In the case where it is intended to improve a visibility of the coated film according to the present invention which is obtained after laminating a surface functional layer such as a hard coat layer on the coating layer, the film thickness of the coating layer is usually in the range of 0.07 to 0.15 *µ*m and preferably 0.08 to 0.12 *µ*m. When the film thickness of the coating layer is out of the above-specified range, the resulting film tends to be deteriorated in visibility owing to occurrence of interference fringes after laminating a surface functional layer on the coating layer.

As the method of forming the coating layer, there may be used conventionally known coating methods such as a reverse gravure coating method, a direct gravure coating method, a roll coating method, a die coating method, a bar coating method and a curtain coating method.

The drying and curing conditions used upon forming the coating layer on the polyester film are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 280°C for 3 to 200 sec.

In any of the off-line coating and in-line coating methods, the heat-setting may be used in combination with irradiation with active energy rays such as irradiation with ultraviolet rays, if required. The polyester film constituting the coated film of the present invention may be previously subjected to surface treatments such as corona treatment and plasma treatment.

In general, in the coated film according to the present invention, the surface functional layer such as a hard coat layer may be provided on the coating layer. The material used in the hard coat layer is not particularly limited. Examples of the material for the hard coat layer include cured products of monofunctional (meth)acrylates, polyfunctional (meth)acrylates and reactive silicon compounds such as tetraethoxysilane. Among these materials, from the viewpoint of satisfying both a good productivity and a high hardness, especially preferred are cured products obtained by polymerizing compositions comprising ultraviolet-curable polyfunctional (meth)acrylates.

The compositions comprising the above ultraviolet-curable polyfunctional (meth)acrylates are not particularly limited. For example, there may be used a composition prepared by mixing one or more kinds of conventionally known ultraviolet-curable polyfunctional (meth)acrylates, a composition commercially available as an ultraviolet-curable hard coat material, or a composition prepared by further adding the other components to the above compositions in such a range that the effects and objects of the present invention are not adversely influenced thereby.

The ultraviolet-curable polyfunctional (meth)acrylates are not particularly limited. Examples of the ultraviolet-curable polyfunctional (meth)acrylates include (meth)acrylic derivatives of polyfunctional alcohols such as dipentaerythritol hexa(meth)acrylate, tetramethylol methane tetra(meth)acrylate, tetramethylol methane tri(meth)acrylate, trimethylol propane tri(meth)acrylate, 1,6-hexanediol di(meth)acrylate and 1,6-bis(3-acryloyloxy-2-hydroxypropyloxy)hexane; polyethylene glycol di(meth)acrylate; and polyurethane (meth)acrylate.

The other components which may be contained in the compositions comprising the ultraviolet-curable polyfunctional (meth)acrylates are not particularly limited. Examples of the other components include inorganic or organic fine particles, a polymerization initiator, a polymerization inhibitor, an antioxidant, an antistatic agent, a dispersant, a surfactant, a light stabilizer and a leveling agent. In addition, when drying the film formed by a wet coating method, an optional amount of a solvent may be added to the compositions, if required.

As the method of forming the hard coat layer by using an organic material, there may be adopted general wet coating methods such as a roll coating method and a die coating method. The thus formed hard coat layer may be subjected to curing reaction, if required, by heating or by irradiating an active energy ray such as an ultraviolet ray and an electron beam thereto.

### EXAMPLES

The present invention is described in more detail below by Examples. However, these Examples are only illustrative and not intended to limit the present invention thereto. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter of particles incorporated in polyester film:

The surface of the polyester film was observed using a laser microscope ("OSL-3000" manufactured by Olympus Corp.), major axis diameters and minor axis diameters of particles in the polyester film were measured to obtain an average value thereof as a particle diameter thereof, and an average value of particles diameters of the 10 particles was defined as an average particle diameter of the particles.

### (3) Method of measuring average particle diameter of particles in coating layer:

Using TEM ("H-7650" manufactured by Hitachi High-Technologies Corp.; accelerated voltage: 100 V), the coating layer was observed to measure particle diameters of 10 particles therein and calculate an average particle diameter thereof from the measured values.

### (4) Center line average roughness (Ra) of surface of film:

Using a surface roughness meter "SE-3F" manufactured by Kosaka Laboratory Ltd., the center line average roughness (Ra) of the surface of the film was measured in a measuring length of 2.5 mm according to JIS B0601-1994. When Ra of the film is less than 3 nm, the film tends to be deteriorated in mar resistance in the film-forming process. The center line average roughness (Ra) of the surface of the film is preferably not less than 4 nm.

### (5) Method of measuring film thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi High-Technologies Corp.; accelerated voltage: 100 V).

### (6) Method of measuring haze:

Using a haze meter "HZ-2" manufactured by Suga Test Instruments Co., Ltd., the haze of the film was measured according to JIS K 7136. The haze value is preferably not more than 2.0% and more preferably not more than 1.5%.

### (7) Method of evaluating feel of particles:

The film was observed under light from a three band fluorescent lamp. The results were evaluated according to the following ratings. The feel of particles of the film is preferably Rank A.
A: No feel of traces of particles (spots owing to the particles present in the film) was observed, and clear feel was attained; and
B: Feel of particles was present, and the film looked whitely.

### (8) Dynamic friction coefficient:

The film was attached onto a flat glass plate having a width of 10 mm and a length of 100 mm. The film was cut into a piece having a width of 18 mm and a length of 120 mm and pressed against a metal pin having a diameter of 8 mm, and the metal pin was slid on the glass plate in a longitudinal direction thereof under an applied load of 30 g at a rate of 40 mm/min to measure a friction force thereof. The friction coefficient measured at the point at which the metal pin was slid 10 mm over the glass plate was evaluated as a dynamic friction coefficient of the film. When the dynamic friction coefficient is not less than 0.8, the film tends to be deteriorated in slipping property. The dynamic friction coefficient of the film is preferably not more than 0.7 and more preferably not more than 0.6. In addition, in the case where the value of *µ*d is more than 1.0 (*µ*d > 1.0), it tends to be difficult to attain an accurate value. Therefore, in such a case, no value was described. Meanwhile, the measurement was conducted in an atmosphere of room temperature (23°C)±1°C and a humidity of 50%±0.5% (RH).

### (9) Method of evaluating interference fringes:

A coating solution prepared by mixing 72 parts by weight of dipentaerythritol hexaacrylate, 18 parts by weight of 2-hydroxy-3-phenoxypropyl acrylate, 10 parts by weight of antimony pentaoxide, 1 part by weight of a photopolymerization initiator ("IRGACURE 184" (tradename) produced by Ciba Specialty Chemicals Corp.) and 200 parts by weight of methyl ethyl ketone was applied on the coating layer formed on the polyester film such that a coating thickness thereof after drying was 5 *µ*m, and cured by irradiating an ultraviolet ray thereto to thereby form a hard coat layer. The resulting film was visually observed under irradiation with light using a three band fluorescent lamp to determine whether or not any interference fringes were recognized. The observation results were evaluated according to the following ratings:
A: No interference fringes were recognized.
B: Thin and scattered interference fringes were recognized.
C: Thin but linear interference fringes were recognized.
D: Interference fringes were apparently recognized.

### (10) Method of evaluating adhesion property of coating layer (HC):

In order to evaluate an adhesion property of the coating layer more strictly, studies have been conducted using a material obtained by excluding antimony pentaoxide from the hard coat solution used in the above evaluation (9). More specifically, a coating solution prepared by mixing 80 parts by weight of dipentaerythritol hexaacrylate, 20 parts by weight of 2-hydroxy-3-phenoxypropyl acrylate, 5 part by weight of a photopolymerization initiator ("IRGACURE 184" (tradename) produced by Ciba Specialty Chemicals Corp.) and 200 parts by weight of methyl ethyl ketone was applied on the coating layer formed on the polyester film such that a coating thickness thereof after drying was 5 *µ*m, and cured by irradiating an ultraviolet ray thereto to thereby form a hard coat layer. The thus obtained film was allowed to stand under environmental conditions of 80°C and 90% RH for 100 hr. Thereafter, the resulting hard coat layer was subjected to cross-cutting to form 100 (10 x 10) cross-cuts thereon. A 18 mm-wide tape ("Cellotape (registered trademark) CT-18" produced by Nichiban Co., Ltd.) was attached onto the thus cross-cut hard coat layer, and then rapidly peeled off therefrom at a peel angle of 180°. Then, the surface of the hard coat layer from which the tape was peeled off was observed to measure an area of the hard coat layer peeled off together with the tape. The evaluation ratings are as follows.
A: Peeled area of the hard coat layer was less than 3%.
B: Peeled area of the hard coat layer was not less than 3% but less than 10%.
C: Peeled area of the hard coat layer was not less than 10% but less than 50%.
D: Peeled area of the hard coat layer was not less than 50%.

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester produced, were subjected to esterification reaction at 260°C in a nitrogen atmosphere. Successively, tetrabutyl titanate in an amount of 50 ppm based on the polyester produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester produced, were subjected to esterification reaction at 225°C in a nitrogen atmosphere. Successively, orthophosphoric acid and germanium dioxide in amounts of 3500 ppm and 70 ppm, respectively, based on the polyester produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64.

### <Method for producing polyester (C)>

The same procedure as used in the above method for producing the polyester (A) was conducted except that the below-mentioned particles X were added in an amount of 0.5% by weight before conducting the melt-polycondensation, thereby obtaining a polyester (C).

### <Method for producing polyester (D)>

The same procedure as used in the above method for producing the polyester (A) was conducted except that the below-mentioned particles Y were added in an amount of 0.5% by weight before conducting the melt-polycondensation, thereby obtaining a polyester (D).

Examples of the particles incorporated in the polyester film are as follows.

### •Particles X:

Organic particles of a copolymer of styrene and divinyl benzene comprising aluminum oxide and having an average particle diameter of 1.4 *µ*m.

### •Particles Y:

Silica particles having an average particle diameter of 3.2 *µ*m

Examples of the compounds constituting the coating layer are as follows.

### (Examples of compounds)

### •Particles (IA):

Silica particles having an average particle diameter of 0.07 *µ*m

### •Particles (IB):

Silica particles having an average particle diameter of 0.09 *µ*m

### •Particles (IC):

Silica particles having an average particle diameter of 0.15 *µ*m

### •Particles (ID):

Silica particles having an average particle diameter of 0.45 *µ*m

### •Polyester resin having a condensed polycyclic aromatic structure (IIA):

Water dispersion of a polyester resin obtained by copolymerizing the following composition:
Monomer composition: (acid component) 2,6-naphthalenedicarboxylic acid/5-sodium sulfoisophthalic acid//(diol component) ethylene glycol/diethylene glycol = 92/8//80/20 (mol%)

### •Polyester resin (IIB):

Water dispersion of a polyester resin obtained by copolymerizing the following composition:
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

### •Acrylic resin (IIC):

Water dispersion of an acrylic resin obtained by polymerizing the following composition:
Emulsion polymer (emulsifier: anionic surfactant) produced from ethyl acrylate/n-butyl acrylate/methyl methacrylate/N-methylol acrylamide/acrylic acid = 65/21/10/2/2 (% by weight)

### •Urethane resin (IID):

Carboxylic acid-water-dispersed type polyester polyurethane resin "HYDRAN AP-40" (produced by DIC Corp.)

### •Oxazoline compound (IIIA):

Acrylic polymer having an oxazoline group and a polyalkyleneoxide chain "EPOCROSS WS-500" (produced by Nippon Shokubai Co., Ltd.; a polymer of a type comprising 1-methoxy-2-propanol solvent in an amount of about 38% by weight).

### •Oxazoline compound (IIIB):

Acrylic polymer having an oxazoline group and a polyalkyleneoxide chain "EPOCROSS WS-700" (produced by Nippon Shokubai Co., Ltd.; VOC-free type).

### •Epoxy compound (IV):

Polyglycerol polyglycidyl ether "DECONAL EX-521" (produced by Nagase Chemtex Co., Ltd.)

### •Hexamethoxymethyl melamine (V):

### •Metal oxide: (VI)

Zirconium oxide particles having an average particle diameter of 0.02 *µ*m

### Example 1:

A mixed raw material (content of particles: 250 ppm) obtained by mixing the polyesters (A), (B) and (C) in amounts of 90%, 5% and 5%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 1:31:1 as output; so designed as to form a surface layer having a thickness of 3.8 *µ*m), followed by cooling and solidifying the thus extruded sheet on the chilled roll, thereby obtaining an undrawn sheet (film condition 1 as shown in Table 1). Next, the thus obtained undrawn sheet was drawn utilizing a difference between peripheral speeds of rolls at 85°C at a draw ratio of 3.4 times in a longitudinal direction thereof. Thereafter, a coating solution 3 shown in the below-mentioned Table 2 was applied on both surfaces of the thus obtained longitudinally drawn film. Then, the thus coated longitudinally drawn film was introduced into a tenter where the film was drawn at 120°C at a draw ratio of 4.0 times in a lateral direction thereof and then heat-set at 225°C. Next, the obtained biaxially drawn film was relaxed by 2% in a lateral direction thereof, thereby obtaining a polyester film having a thickness of 125 *µ*m which was provided on each surface thereof with a coating layer having a thickness of 0.10 *µ*m (after dried). As a result of evaluating the thus obtained polyester film, it was confirmed that the polyester film exhibited a low dynamic friction coefficient, a good slipping property, a good transparency and a good adhesion property, and were improved in suppression of occurrence of interference fringes. The properties of the thus obtained film are shown in Table 3.

### Examples 2 to 18:

The same procedure as in Example 1 was conducted except that the amount of the particles incorporated in the polyester film and the surface layer thickness were changed as shown in the film conditions in Table 1, and the coating agent composition was changed as shown in Table 2, thereby obtaining polyester films. The properties of the thus obtained polyester films are shown in Table 3. As a result, it was confirmed that the polyester films exhibited good slipping property and transparency, and had a good adhesion property.

### Comparative Examples 1 to 7:

The same procedure as in Example 1 was conducted except that the film conditions and the coating agent composition were changed as shown in Tables 1 and 2, respectively, thereby obtaining polyester films. The evaluation results of the thus obtained coated films are as shown in Table 3, namely, it was confirmed that some of the films had a fear of formation of flaws owing to low Ra or were deteriorated in transparency, and some other of the films suffered from observation of clear interference fringes or had a poor adhesion property.

**Table 1**

| Film conditions | Content of particles X (ppm) | Content of particles Y (ppm) | Surface layer thickness (*µ*m) |
|---|---|---|---|
| 1 | 250 | 0 | 3.8 |
| 2 | 350 | 0 | 3.8 |
| 3 | 500 | 0 | 3.8 |
| 4 | 150 | 0 | 2.7 |
| 5 | 350 | 0 | 2.7 |
| 6 | 350 | 0 | 2.0 |
| 7 | 0 | 0 | 3.8 |
| 8 | 0 | 350 | 3.8 |

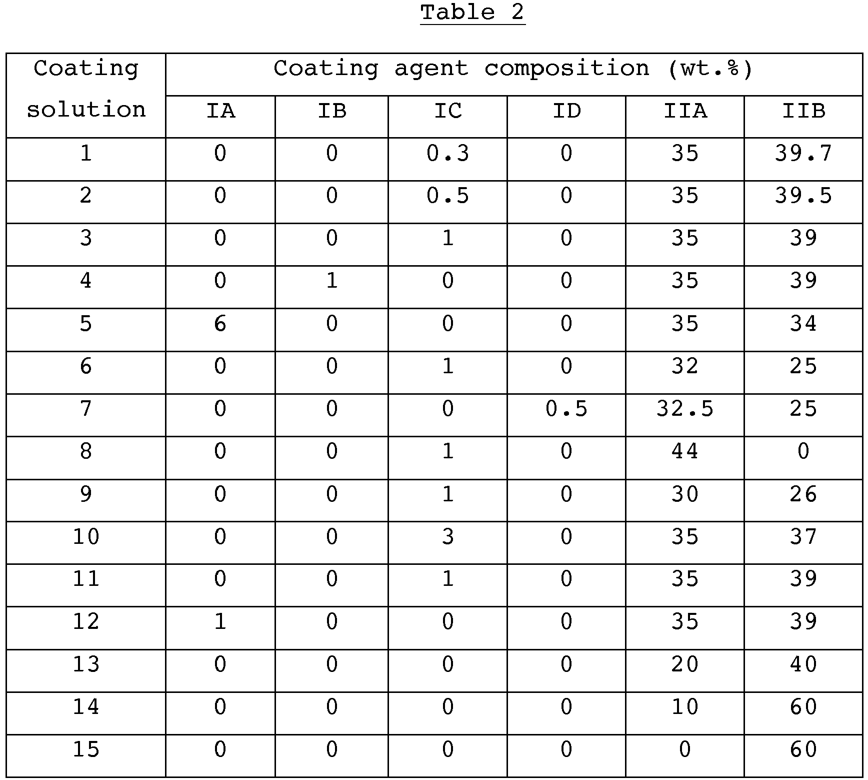

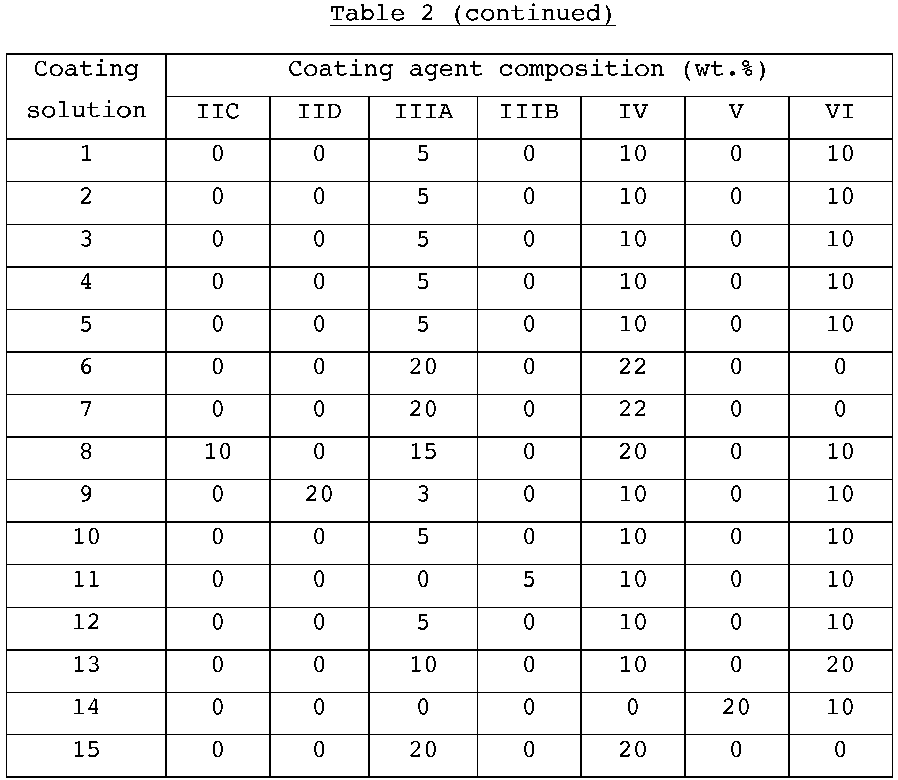

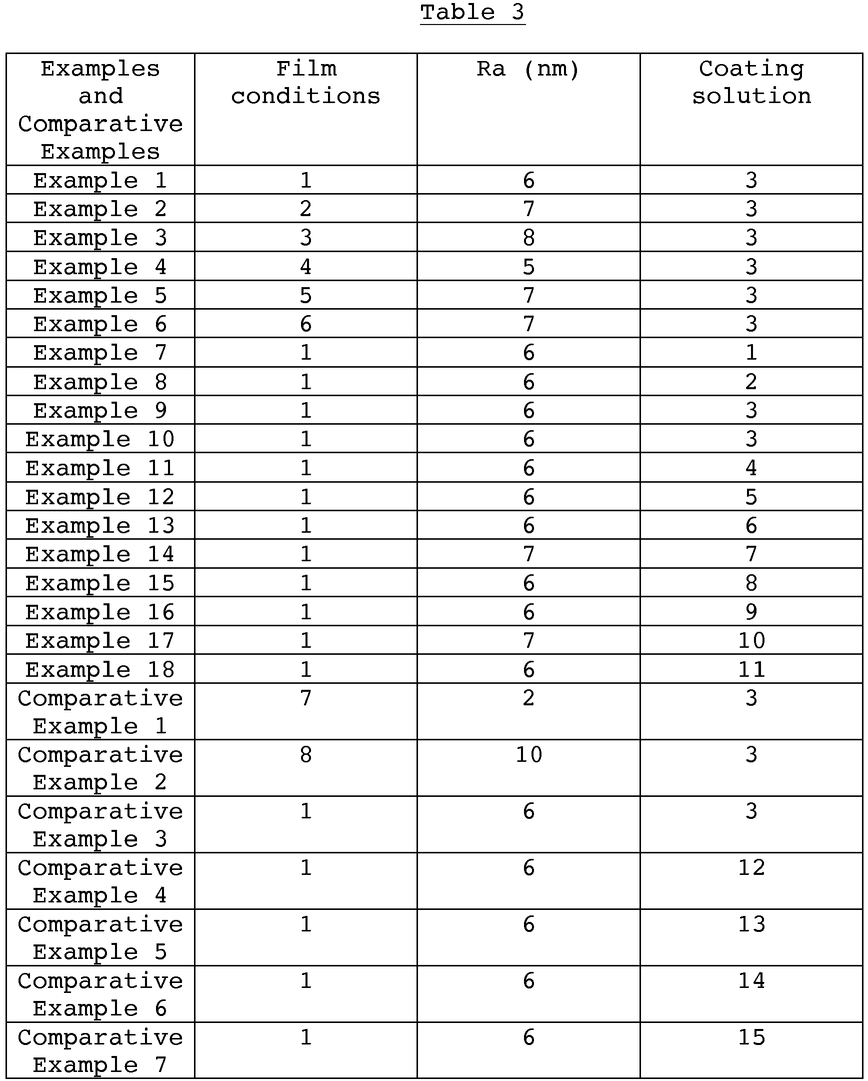

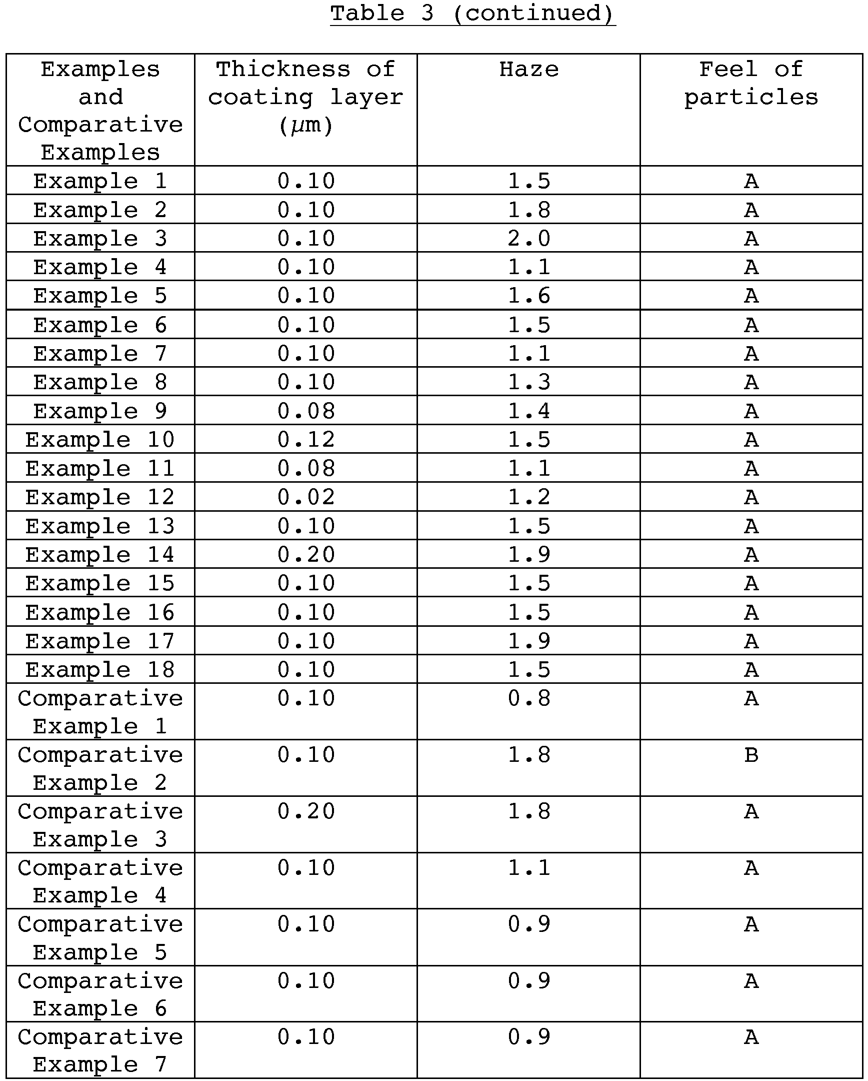

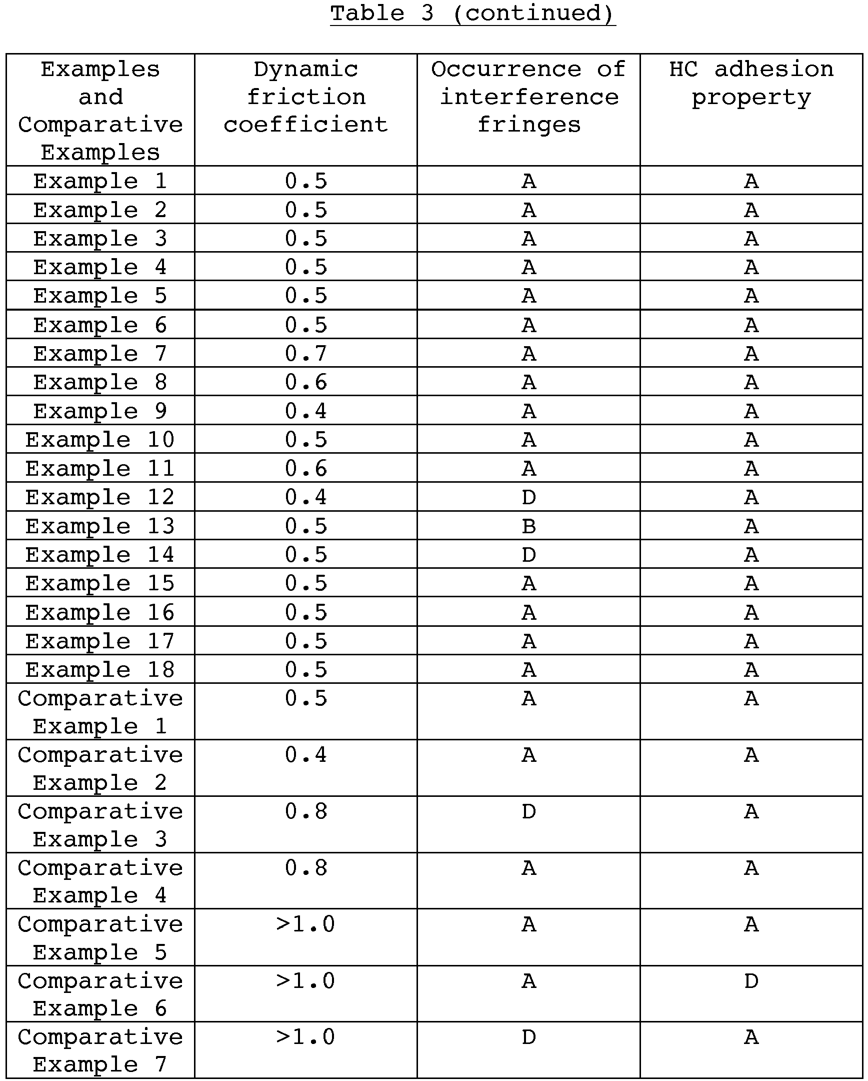

### INDUSTRIAL APPLICABILITY

The film of the present invention can be suitably used in the applications in which good transparency and slipping property are needed, and good adhesion property to a surface functional layer such as a hard coat layer as well as good visibility are required with importance, for example, as film members for transparent electrodes for touch panels, etc.

## Claims

1. A coated film comprising a multilayer polyester film comprising both outermost layers in which particles having an average particle diameter of not more than 3.0 *µ*m are incorporated, and a coating layer formed on at least one surface of the multilayer polyester film, the coating layer comprising particles having an average particle diameter larger than a thickness of the coating layer.

2. The coated film according to claim 1, wherein the multilayer polyester film has a thickness of 10 to 300 *µ*m, the polyester film layers as the outermost layers comprising the particles each have a thickness of 0.5 to 125 *µ*m, the coating layer has a thickness of 0.01 to 1.0 *µ*m, and the particles present in the coating layer has an average particle diameter of 0.03 to 1.0 *µ*m.

3. The coated film according to claim 1 or 2, wherein a content of the particles in the respective polyester film layers is 1 to 5000 ppm, and a content of the particles in the coating layer is 0.05 to 10% by weight based on a total weight of while nonvolatile components in a coating solution forming the coating layer.
